# EUROPÄISCHE PATENTSCHRIFT

(11) **EP 1 259 390 B1**
(45) Veröffentlichungstag und Bekanntmachung des Hinweises auf die Patenterteilung: **05.11.2008**
(21) Anmeldenummer: 01915048.1
(22) Anmeldetag: 28.02.2001
(51) Int. Cl.: B60C 11/24

(54) **REIFEN MIT EINEM SENSOR SOWIE VERFAHREN ZUR BESTIMMUNG EINER VERSCHLEISSGRÖSSE EINES SOLCHEN REIFENS**
TYRE COMPRISING A SENSOR AND METHOD FOR DETERMINING A WEAR VALUE FOR A TYRE OF THIS TYPE
PNEUMATIQUE DOTE D'UN DETECTEUR ET PROCEDE PERMETTANT DE DETERMINER UNE GRANDEUR D'USURE D'UN TEL PNEUMATIQUE

(30) Priorität: 03.03.2000 DE 10010631
(43) Veröffentlichungstag der Anmeldung: 27.11.2002
(73) Patentinhaber: Continental Automotive GmbH, 30165 Hannover (DE)
(72) Erfinder: BULST, Wolf-Eckhart, 81739 München (DE); POHL, Alfred, A-2130 Mistelbach (AT); SEIFERT, Franz, A-1170 Wien (AT); STEINDL, Reinhard, A-3390 Melk (AT)
(86) Internationale Anmeldenummer: PCT/DE2001/000744
(87) Internationale Veröffentlichungsnummer: WO 2001/064460

(56) Entgegenhaltungen:
- EP-A- 0 937 615
- EP-A- 0 989 394

## Beschreibung

Die Erfindung betrifft einen Reifen umfassend eine radial innenliegende Karkasse, eine radial außen auf dieser angebrachte Basisschicht, ein viele radial außen auf der Basisschicht angebrachte Profilelemente umfassendes Profil sowie einen in der Basisschicht angeordneten, einem aus den Profilelementen ausgewählten Profilelement zugeordneten Sensor zur Bestimmung einer auf das ausgewählte Profilelement einwirkenden maximalen Kraft.

Außerdem betrifft die Erfindung ein Verfahren zur Bestimmung einer verschleißgröße eines solchen sich drehend auf einem Untergrund abrollenden Reifens, wobei während des Abrollens mit dem Sensor eine auf das ausgewählte Profilelement einwirkende maximale Kraft gemessen und aus der maximalen Kraft die Verschleißgröße bestimmt wird.

Ein solches Verfahren und ein solcher Reifen sind bekannt aus der EP 0 937 615 A2. Der Reifen hat einen einem herkömmlichen Kraftfahrzeugreifen entsprechenden Aufbau mit einer Karkasse, d. h. einem aus textilem und/oder metallischem Gewebe laminierten und mit vulkanisiertem Kautschuk imprägnierten, bezüglich einer Achse radial innenliegenden Aufbau, auf welchem radial außen eine aus vulkanisiertem Kautschuk bestehende Basisschicht aufgebracht ist. Auf der Basisschicht ist radial außen ein Profil umfassend viele ebenfalls aus vulkanisiertem Kautschuk bestehende Profilelemente angebracht. Auf dem Profil rollt der Reifen auf einer Unterlage ab, wobei er sich um die Achse dreht. Dabei wird mit dem Sensor eine auf ein zugeordnetes Profilelement einwirkende Kraft gemessen und zur Bestimmung einer Verschleißgröße des Reifens ausgewertet.

Ein solcher Reifen ist auch benannt aus dem Aufsatz "Sensorreifen mit berührungsloser Daten- und Energieübertragung" von J. Stöcker, P. Hahne und B. Breuer, VDI-Fortschrittsberichte, Reihe 8, Nr. 515, VDI-Verlag GmbH, Düsseldorf 1995, Seiten 10-23.

Bei dem Reifen mit einem Sensor gemäß EP 0 937 615 A2 bildet der Sensor mit dem zugehörigen Transponder und der zugehörigen Antenne ein Sensorsystem, und der Transponder umfaßt ein Oberflächenwellenelement. Dieses Sensorsystem ist ein vollständig passiver elektronischer Schaltkreis, d. h. es erfordert keine eigene Energieversorgung. Die Energieversorgung erfolgt folgendermaßen: Ein von dem Reifen getrenntes Auswertegerät sendet einen hochfrequenten elektromagnetischen Impuls an das Sensorsystem, und dieser gelangt über die Antenne auf das Oberflächenwellenelement. Dort wird auf einem piezoelektrischen Substrat mittels eines elektroakustischen Wandlers eine akustische Oberflächenwelle erzeugt, die sich ausbreitet und von einer Anordnung akustischer Reflektoren auf dem Substrat zu dem Wandler zurückgeworfen wird. Die Reflexionseigenschaften der Anordnung werden durch den Sensor in definierter Weise beeinflußt; der Sensor ist beispielsweise ein Drucksensor, insbesondere ein druckempfindlicher Widerstand, welcher an die Anordnung der Reflektoren angeschlossen ist und deren Reflexionseigenschaften definiert verändert. Auch kann der Sensor ein piezoelektrischer Kristall sein, welcher unter einer mechanischen Belastung eine elektrische Spannung erzeugt, mit welcher die Kapazität einer angeschalteten Kapazitätsdiode, die an die reflektierende Anordnung geschaltet ist, verändert wird und so die Reflexionseigenschaft der Anordnung beeinflußt. Derart können verschiedene Kenngrößen des Reifens gemessen werden.

Aus der WO 98/36395 A2 gehen eine Anordnung und ein Verfahren zur Erzeugung kodierter Hochfrequenzsignale unter Einbeziehung eines Oberflächenwellenelements hervor. Die Anordnung beinhaltet ein Oberflächenwellenelement wie vorstehend beschrieben und umfaßt zusätzlich eine Einrichtung zur Erzeugung der betriebsnotwendigen elektrischen Energie durch einen Umgebungseinfluß. Diese Anordnung kann arbeiten ohne von einer spezifischen, dauernd vorhandenen elektrischen Energiequelle abhängig zu sein und ohne zur Gewinnung eines gewünschten Signals mit einem elektromagnetischen Impuls beaufschlagt werden zu müssen; sie ist somit weitgehend autonom.

Ein herkömmlicher Reifen wie vorstehend beschrieben umfaßt in der Regel verschiedene Arten von Profilelementen. Die meisten dieser Profilelemente sind so gestaltet, daß sie beim Abrollen des Reifens auf einer Unterlage mit der Unterlage zyklisch in einen Reibungskontakt treten, wobei die Gesamtheit des mit der Unterlage jeweils in Kontakt stehenden Profils als "Latsch" des Reifens bezeichnet wird. Auch gibt es andere Profilelemente, die weniger hoch über die Basisschicht ragen als die vorstehend beschriebenen, den Latsch bildenden Profilelemente, und jeweils als "Verschleißindikator" (fachsprachlich "Tyre Wear Indicator", abgekürzt TWI) bezeichnet werden. Haben sich die den Latsch bestimmenden Profilelemente so weit verschlissen, daß sie nicht mehr über die Verschleißindikatoren hinausragen, so ist dies ein Zeichen, daß der Verschleiß des Reifens ein vorgegebenes Maximum erreicht hat und nicht mehr benutzt werden darf.

Ein Verfahren zur Messung des Reifenverschleißes gemäß dem Oberbegriff des Anspruchs 9 sowie ein dafür ausgestalteter Reifen sind aus Figur 8c und der zugehörigen Beschreibung der bereits erwähnten EP 0 937 615 A2 bekannt. Ein Reifen nach dem Oberbegriff des Anspruchs 1 ist aus Figur 1 und der zugehörigen Beschreibung derselben Schrift bekannt.

Die Aufgabe der vorliegenden Erfindung ist, ein alternatives Verfahren zur Messung des Reifenverschleißes sowie einen dafür geeigneten Reifen anzugeben.

Zur Lösung dieser Aufgabe angegeben wird ein Reifen umfassend eine radial innenliegende Karkasse, eine radial außen auf dieser angebrachte Basisschicht, ein viele radial außen auf der Basisschicht angebrachte Profilelemente umfassendes Profil sowie einen in der Basisschicht angeordneten, einem aus den Profilelementen ausgewählten Profilelement zugeordneten Sensor zur Bestimmung einer auf das ausgewählte Profilelement einwirkenden maximalen Kraft, wobei das ausgewählte Profilelement auf der Basisschicht von den anderen Profilelementen abgesetzt ist und andere Profilelemente über das ausgewählte Profilelement hinausragen, solange der Verschleiß des Reifens unterhalb einer vorgegebenen Grenze bleibt.

Die Erfindung geht aus von der Erkenntnis, daß die Kompliziertheit der gemäß herkömmlicher Praxis zu erhaltenden Signale wesentlich herrührt von einer komplexen und analytisch kaum bestimmbaren oder modellierbaren Wechselwirkung zwischen einander benachbarten Profilelementen. Der Kraftfluß im Latsch des Reifens ist unter anderem wesentlich bestimmt durch Wechselwirkungen zwischen den Profilelementen. Daher ist der Sensor erfindungsgemäß einem Profilelement zugeordnet, welches von allen anderen Profilelementen mechanisch entkoppelt ist. Dies ist realisiert dadurch, daß das Profilelement auf der Basisschicht von den anderen Profilelementen abgesetzt wird, beispielsweise dadurch, daß es ausgebildet ist mit einer Form, welche sich mit zunehmendem Abstand von der Basisschicht verjüngt. Dadurch entsteht unter dem Profilelement ein Kraftfluß, welcher allein durch die auf dieses Profilelement ausgeübte Kraft bestimmt wird und somit eine Aussage über die in diesem relativ einfachen mechanischen System herrschenden Kräfte erlaubt.

Das ausgewählte Profilelement ist ein Verschleißindikator. Dadurch ist die Bestimmung einer Verschleißgröße zusätzlich vereinfacht, da auf dieses ausgewählte Profilelement überhaupt erst dann eine wesentliche Kraft ausgeübt wird, wenn die anderen Profilelemente des Reifens so weit verschlissen sind, daß das ausgewählte Profilelement beim Abrollen des Reifens in Kontakt mit dem entsprechenden Untergrund tritt. Die Verschleißgröße kann dann als binärer Wert bestimmt werden: Sie ist Null, solange keine Kraft auf das ausgewählte Profilelement festgestellt wird, und sie ist Eins, wenn eine Kraft in wesentlicher Höhe festgestellt wird, wenn also der Verschleiß des Reifens bis zu einer vorgegebenen Grenze fortgeschritten ist.

Der Sensor ist vorzugsweise ein Drucksensor, insbesondere ein piezoelektrisches Element. Ebenso vorzugsweise ist der Sensor mit einem in der Basisschicht angeordneten Transponder umfassend eine Antenne verbunden, wobei der Transponder und der Sensor eingerichtet sind zur Erzeugung eines über die Antenne abstrahlbaren Signals, welches eine Information über die maximale Kraft enthält. Besonders bevorzugt ist eine Weiterbildung, bei der der Transponder derart eingerichtet ist, daß das Signal zusätzlich eine Identifizierungsinformation enthält und somit eine Identifizierung des Transponders bzw. des Reifens gestattet.

Der Sensor und der Transponder bilden vorzugsweise einen passiven elektronischen Schaltkreis und dabei umfaßt der Transponder vorzugsweise ein Oberflächenwellenelement. Ebenfalls vorzugsweise ist der Sensor als Energiequelle für den Transponder ausgebildet - dies kommt insbesondere in Betracht in Zusammenhang mit der Auswahl eines Verschleißindikators als ausgewähltes Profilelement, wie vorstehend beschrieben.

Zur Lösung der Aufgabe angegeben wird auch ein Verfahren zur Bestimmung einer Verschleißgröße eines sich drehend auf einem Untergrund abrollenden Reifens umfassend eine radial innenliegende Karkasse, eine radial außen auf dieser angebrachte Basisschicht, ein viele radial außen auf der Basisschicht angebrachte Profilelemente umfassendes Profil sowie einen in der Basisschicht angeordneten, einem aus den Profilelementen ausgewählten Profilelement zugeordneten Sensor, wobei das ausgewählte Profilelement auf der Basisschicht von den anderen Profilelementen abgesetzt ist, wobei der Sensor ein Sensor zur Bestimmung einer auf das ausgewählte Profilelement einwirkenden maximalen Kraft ist, während des Abrollens mit dem Sensor die auf das ausgewählte Profilelement einwirkende maximale Kraft gemessen wird, aus der maximalen Kraft die Verschleißgröße bestimmt wird und andere Profilelemente über das ausgewählte Profilelement hinausragen, solange der Verschleiß des Reifens unterhalb einer vorgegebenen Grenze bleibt.

Dieses Verfahren zeichnet sich insbesondere dadurch aus, daß eine in einem an dem Reifen befindlichen einfachen geometrischen System auftretende Kraft gemessen wird, wobei Einflüsse durch Wechselwirkungen des ausgewählten Profilelements mit anderen Profilelementen nicht auftreten. Im übrigen erschließen sich die Vorteile des erfindungsgemäßen Verfahrens aus den Ausführungen zum erfindungsgemäßen Reifen mit Sensor, worauf hiermit verwiesen wird.

Vorzugsweise wird in dem Verfahren zunächst die Verschleißgröße gleich Null bestimmt, weiter ein zeitlicher Verlauf der maximalen Kraft registriert und ferner bei Auftreten einer ersten wesentlichen Veränderung der maximalen Kraft die Verschleißgröße gleich Eins bestimmt. Man beobachtet also die maximale Kraft, die sich dann einstellt, wenn das ausgewählte Profilelement sich im Latsch befindet, über einen längeren Zeitraum und zieht den Schluß auf die Verschleißgröße aus dem Verlauf und insbesondere aus dem Auftreten einer wesentlichen zeitlichen Veränderung der maximalen Kraft.

Mit weiterem Vorzug wird der zeitliche Verlauf nach dem Auftreten der ersten wesentlichen Veränderung weiter registriert, und bei Auftreten einer zweiten wesentlichen Veränderung, welche der ersten wesentlichen Veränderung entgegengerichtet ist, innerhalb eines vorgegebenen Zeitraums nach der ersten Veränderung die Verschleißgröße wieder gleich Null gesetzt. Diese Ausgestaltung gestattet es, eine im normalen Betrieb nicht oder allenfalls selten auftretende besondere Belastung des ausgewählten Profilelements nachzuweisen und zu berücksichtigen. Eine solche besondere Belastung tritt beispielsweise auf, wenn der Reifen auf einem mit Wasser bedeckten Untergrund abrollt und das Profil den Reibungskontakt mit dem Untergrund verliert - dieser Effekt ist in der Automobiltechnik als "Aquaplaning" bekannt. Unter diesen Umständen gelangt auch Wasser zwischen die Profilelemente und auf die Verschleißindikatoren, und es kann sich dort ein hydrostatischer Druck aufbauen. Dieser hydrostatische Druck ist insbesondere dann, wenn das ausgewählte Profilelement ein Verschleißindikator ist, mit dem Sensor meßbar. Aquaplaning unterscheidet sich allerdings von gewöhnlichem Verschleiß dadurch, daß die maximale Kraft sich nach kurzer Zeit wieder abbaut, weil der entstandene hydrostatische Druck wieder verschwindet; dies wird entsprechend der beschriebenen Ausgestaltung der Erfindung ausgenutzt, um zwischen Aquaplaning und Verschleiß zu unterscheiden.

Die Information über die maximale Kraft wird vorzugsweise über einen in der Basisschicht angeordneten und mit dem Sensor verbundenen Transponder erfaßt und über ein entsprechendes, in dem Transponder erzeugtes Signal abgestrahlt. Dieses Signal enthält vorzugsweise zusätzlich eine zu dem Reifen gehörige Identifizierungsinformation. Es wird weiterhin vorzugsweise an einem von dem Reifen mechanisch getrennten Auswertegerät empfangen, und in dem Auswertegerät wird aus der Information in dem Signal die Verschleißgröße bestimmt.

Nunmehr werden Ausführungsbeispiele der Erfindung anhand der Zeichnung erörtert. In der Zeichnung sind nur diejenigen Merkmale dargestellt, auf die für die nachfolgenden Erläuterungen Bezug genommen werden muß; es sind zusätzlich zur nachfolgenden Erläuterung die einschlägigen Hinweise aus den zitierten Dokumenten des Standes der Technik sowie dem allgemeinen Stand der Technik betreffend Reifen für Kraftfahrzeuge zu beachten. Im einzelnen zeigen:
Figur 1 einen Reifen mit Sensor sowie ein Abfragegerät;
Figur 2 und Figur 3 elektrische Schaltungen zur Verbindung des Sensors mit einem Oberflächenwellenelement.

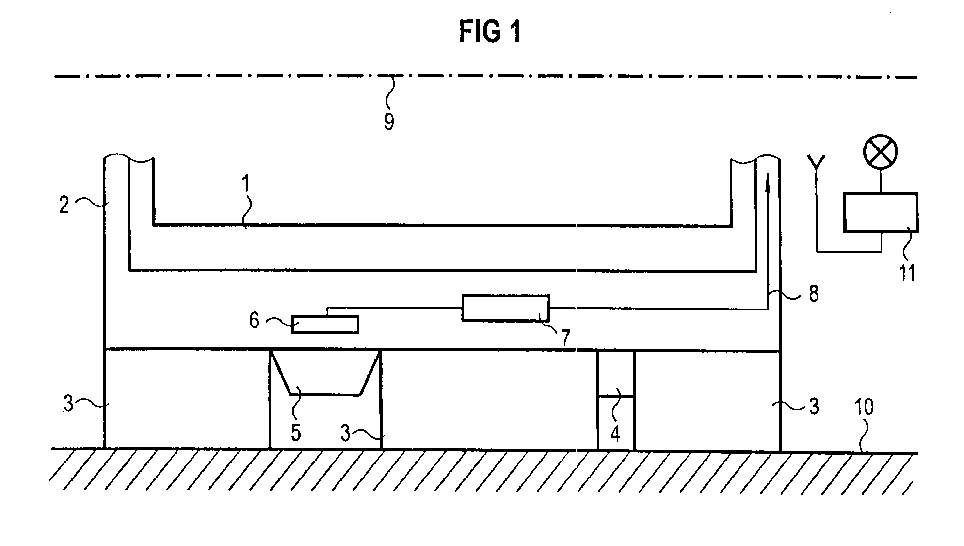

Figur 1 zeigt einen Reifen, umfassend eine bezüglich der Achse 9 radial innenliegende Karkasse 1. Diese ist aufgebaut als Laminat aus textilem und/oder metallischem Gewebe und mit vulkanisiertem Kautschuk imprägniert. Sie bildet ein Grundgerüst für den Reifen und bestimmt weitgehend seine Form und Stabilität. Radial außen auf der Karkasse 1 angebracht ist eine Basisschicht 2, welche aus vulkanisiertem Kautschuk besteht. Sowohl die Karkasse 1 als auch die Basisschicht 2 sind seitwärts ihrer weitgehend radial um die Achse 9 ausgerichteten jeweiligen Bereiche axial einwärts zur Achse 9 hin fortgesetzt und begrenzen den Reifen somit auch axial. Radial außen auf der Basisschicht 2 angebracht sind viele Profilelemente 3, 4 und 5, welche insgesamt ein Profil des Reifens bilden. Mit den Profilelementen 3 steht der Reifen auf dem Untergrund 10 auf; es sind diese profilelemente 3, die den betriebsnotwendigen Reibungskontakt vermitteln, wenn der Reifen sich um die Achse 9 drehend auf dem Untergrund 10 abrollt. Die Profilelemente 4 und 5 sind Verschleißindikatoren. Solange sich ein Verschleiß des Reifens, welcher sich äußert in einer allmählichen Abtragung der Profilelemente 3, unterhalb einer vorgegebenen Grenze bleibt, ragen die Profilelemente 3 über die Verschleißindikatoren 4 und 5 hinaus und vermitteln allein den Reibungskontakt zum Untergrund 10. Sind die Profilelemente 3 soweit abgetragen, daß sie nicht mehr über die Verschleißindikatoren 4 und 5 hinausragen, was durch eine einfache visuelle Kontrolle feststellbar ist, so ist davon auszugehen, daß der Verschleiß des Reifens eine vorgegebene Grenze erreicht hat und der Reifen nicht mehr benutzt werden darf. Der geschilderte Aufbau des Reifens entspricht dem Stand der Technik hinsichtlich des Aufbaus des Reifens für ein Kraftfahrzeug.

Es ist nun erwünscht, den Verschleiß des Reifens auch während des Betriebes zu kontrollieren. Zu diesem Zweck ist der Reifen versehen mit einem Sensor 6 und einem Transponder 7 und 8, welche alle in der Basisschicht 2 angeordnet sind. Für den Transponder 7 dargestellt ist in Figur 1 nur symbolisch ein Oberflächenwellenelement 7, diesbezügliche Ausführungsbeispiele werden später erörtert. Der Sensor 6 ist ein piezoelektrischer Drucksensor und ist einem besonderen Profilelement 5 zugeordnet. Dieses Profilelement 5 ist von allen anderen Profilelementen 3 und 4 mechanisch entkoppelt, wobei von jedweder direkten mechanischen Verbindung zwischen dem besonderen Profilelement 5 und den anderen Profilelementen 3 und 4 abgesehen ist. Zu diesem Zweck verjüngt sich das ausgewählte Profilelement 5 im Querschnitt mit zunehmendem Abstand von der Basisschicht 2. So ist sichergestellt, daß der Sensor 6 allein eine auf das ausgewählte Profilelement 5 einwirkende Kraft mißt, ohne daß diese Messung durch eine Wechselwirkung zwischen ausgewähltem Profilelement 5 und einem anderen Profilelement 3 oder 4 beeinträchtigt ist. Es wird eine auf das ausgewählte Profilelement 5 wirkende maximale Kraft bestimmt. Die maximale Kraft ergibt sich dann, wenn das Profilelement 5 mit dem Untergrund 10 in Reibungskontakt getreten ist, wenn also der Verschleiß des Reifens hinreichend fortgeschritten ist und das Profilelement 5 den Untergrund 10 direkt kontaktiert. Aus der Größe dieser maximalen Kraft kann in einfacher Weise auf den Verschleiß geschlossen werden. Letzteres ist in dem in Figur 1 dargestellten Fall besonders einfach: Solange der Verschleiß des Reifens hinreichend gering ist wie dargestellt in der Figur, kommt es zu einem solchen Reibungskontakt mit dem ausgewählten Profilelement 5 nicht; die festzustellende maximale Kraft bleibt dementsprechend im wesentlichen Null. Sobald der Verschleiß hinreichend weit fortgeschritten ist, mißt der Sensor 6 eine deutlich von Null verschiedene Kraft, und das Auftreten dieser deutlich von Null verschiedenen maximalen Kraft ist ein Indikator für den bis zu einer vorgegebenen Grenze fortgeschrittenen Verschleiß, also als Verschleißgröße zu verwenden. In einem Ausnahmefall kann es auch dann zu einer deutlich von Null verschiedenen maximalen Kraft kommen, wenn der Verschleiß des Reifens die vorgegebene Grenze noch nicht erreicht hat, dann nämlich, wenn der Reifen auf einem mit Wasser bedeckten Untergrund 10 abrollt und den Reibungskontakt zu diesem verliert, weil sich das Wasser zwischen und unter den Profilelementen 3, 4 und 5 aufstaut. Dabei kommt es zur Ausbildung eines hydrostatischen Drucks auf das ausgewählte Profilelement 5, und dieser ist über die Messung der maximalen Kraft nachweisbar. Vom Verschleiß unterscheidet sich die durch den hydrostatischen Druck veränderte maximale Kraft erfahrungsgemäß allerdings dadurch, daß sie in kurzer Zeit wieder abklingt, wenn nämlich der Reifen wieder einen Reibungskontakt zum Untergrund 10 gewinnt. Somit kann aus einer kurzzeitig auftretenden maximalen Kraft von wesentlicher Höhe darauf geschlossen werden, daß der soeben beschriebene Effekt des "Aquaplaning" aufgetreten ist und an den Benutzer des Reifens eine entsprechende Warnmeldung veranlaßt werden.

Die von dem Sensor 6 gemessene maximale Kraft wird vom Transponder 7 einem elektromagnetischen Signal aufgeprägt, welches über die Antenne 8 abgestrahlt wird. Ein Auswertegerät 11, das mechanisch von dem Reifen getrennt ist, kann dieses Signal empfangen und zur Ermittlung der Verschleißgröße auswerten. Mit dem Auswertegerät 11 verbunden sein kann ein beliebiges Anzeigemittel, um dem Benutzer des Reifens den Verschleiß oder den Aquaplaning-Effekt zu zeigen. Der Transponder 7 ist vorzugsweise ein vollständig passiver elektronischer Schaltkreis und erübrigt es damit, in dem Reifen eine Energiequelle für den Transponder vorzusehen. Die Energie zur Bildung des gewünschten Signals liefert das Auswertegerät 11 durch Sendung eines hochfrequenten elektromagnetischen Impulses, welcher über die Antenne 8 zum Transponder 7 gelangt, dort in einer der maximalen Kraft entsprechenden, definierten Weise verändert und über die Antenne 8 zum Auswertegerät 11 zurückgesendet wird.

Im Rahmen der Ausführung gemäß Figur 1 ist es allerdings auch möglich, den Sensor 6 als Energiequelle für den Transponder 7 auszubilden. Dazu wird für den Sensor 6 ein piezoelektrisches Element gewählt, welches unter einer entsprechenden Druckbelastung ein elektrisches Signal erzeugt, aus welchem ein hochfrequenter Impuls erzeugt wird, der dem Transponder 7 bzw. dessen Oberflächenwellenelement 7 zugeleitet wird. Dort wird dem hochfrequenten Impuls eine Identifizierungsinformation aufgeprägt, die eine Zuordnung zu dem Reifen ermöglicht; außerdem wird eine notwendige schmalbandige Filterung durchgeführt. Das entsprechend modifizierte Signal gelangt über die Antenne 8 zum Auswertegerät 11, welches dementsprechend keinen Sender, sondern nur noch einen Empfänger enthalten muß.

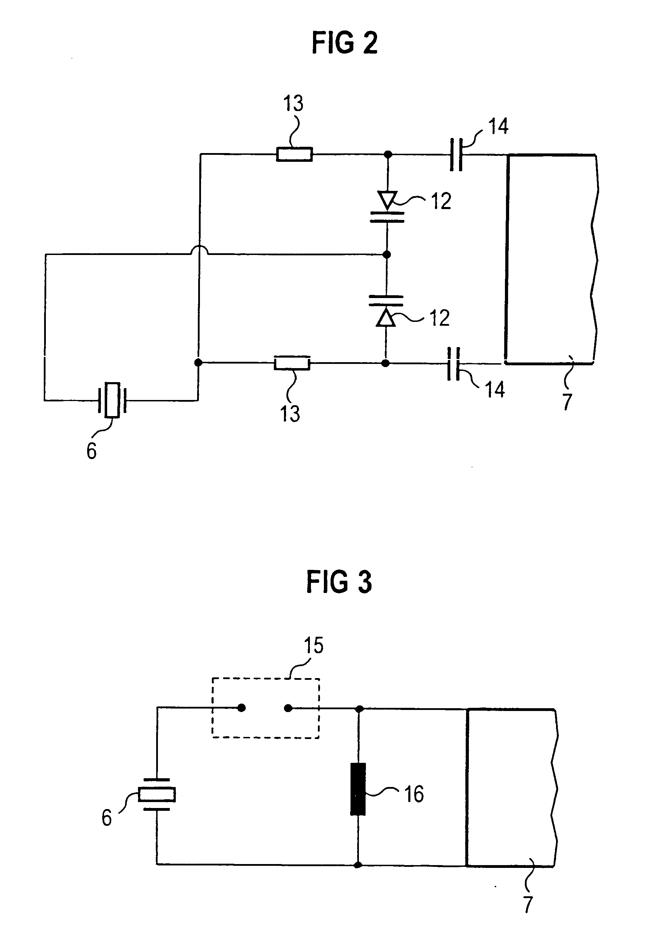

Figur 2 zeigt eine Möglichkeit zur Verbindung des Sensors 6 mit dem Oberflächenwellenelement 7 für einen vollständig passiven Transponder. Der piezoelektrische Sensor 6 erzeugt unter einer Druckbelastung, wenn also (siehe Figur 1) das ausgewählte Profilelement 5 mit dem Untergrund 10 in Kontakt kommt und somit einer radial wirkenden Kraft unterworfen wird, ein elektrisches Spannungssignal. Dieses Spannungssignal gelangt über Koppelwiderstände 13 auf eine Anordnung mit zwei antiparallel geschalteten Kapazitätsdioden 12 und verändert deren Kapazität entsprechend der auf das ausgewählte Profilelement 5 einwirkenden maximalen Kraft. Die Kapazitätsdioden 12 sind über Koppelkondensatoren 14 an das Oberflächenwellenelement 7 geschaltet und verändern die Reflektivität eines darauf befindlichen Reflektors für eine akustische Oberflächenwelle in definierter Weise. Aus der so veränderten akustischen Oberflächenwelle wird ein hochfrequentes elektromagnetisches Signal erzeugt und wie beschrieben gesendet.

In der Ausführung gemäß Figur 3 dient der piezoelektrische Sensor 6 als Energiequelle für den Transponder. Zu diesem Zweck ist der Sensor 6 mit einer Funkenstrecke 15 und einer Induktivität 16, zu welcher das Oberflächenwellenelement 7 parallel geschaltet ist, überbrückt. Wird durch eine hinreichend hohe Druckbelastung des Sensors 6 eine ausreichend hohe Spannung erzeugt, so entsteht in der Funkenstrecke 15 ein Funken, mit welchem ein breitbandiges hochfrequentes elektrisches Signal verbunden ist. Dies gelangt vermittels der Induktivität 16, welche als Hochpaßfilter fungiert, zum Oberflächenwellenelement 7 und erzeugt dort eine akustische Oberflächenwelle, welche mit einer Identifizierungsinformation versehen und gefiltert sowie in beschriebener Weise zu einem Auswertegerät 11 gesendet wird. Das Auftreten des Signals selbst ist damit ein Indikator dafür, daß der Sensor eine maximale Kraft in wesentlicher Höhe nachgewiesen hat, woraus auf eine Verschleißgröße für den zugehörigen Reifen geschlossen werden kann.

## Patentansprüche

1. Reifen umfassend eine radial innenliegende Karkasse (1), eine radial außen auf dieser angebrachte Basisschicht (2), ein viele radial außen auf der Basisschicht (2) angebrachte Profilelemente (3, 4, 5) umfassendes Profil sowie einen in der Basisschicht (2) angeordneten, einem aus den Profilelementen (3, 4, 5) ausgewählten Profilelement (5) zugeordneten Sensor (6) zur Bestimmung einer auf das ausgewählte Profilelement (5) einwirkenden maximalen Kraft, wobei das ausgewählte Profilelement (5) auf der Basisschicht von den anderen Profilelementen (3, 4) abgesetzt ist,
**dadurch gekennzeichnet,**
**daß** andere Profilelemente (3) über das ausgewählte Profilelement (5) hinausragen, solange der Verschleiß des Reifens unterhalb einer vorgegebenen Grenze bleibt.

2. Reifen nach Anspruch 1, bei dem der Sensor (6) ein Drucksensor (6) ist.

3. Reifen nach Anspruch 2, bei dem der Sensor (6) ein piezoelektrisches Element (6) ist.

4. Reifen nach einem der vorigen Ansprüche, bei dem der Sensor (6) mit einem in der Basisschicht (2) angeordneten Transponder (7, 8, 12, 13, 14, 15, 16) umfassend eine Antenne (8) verbunden ist, wobei der Transponder (7, 8, 12, 13, 14, 15, 16) und der Sensor (6) eingerichtet sind zur Erzeugung eines über die Antenne (8) abstrahlbaren Signals, welches eine Information über die maximale Kraft enthält.

5. Reifen nach Anspruch 4, bei dem der Transponder (7, 8, 12, 13, 14, 15, 16) derart eingerichtet ist, daß das Signal zusätzlich eine Identifizierungsinformation enthält.

6. Reifen nach einem der Ansprüche 4 und 5, bei dem der Sensor (6) mit dem Transponder (7, 8, 12, 13, 14, 15, 16) einen passiven elektronischen Schaltkreis darstellt.

7. Reifen nach Anspruch 8, bei dem der Transponder (7, 8, 12, 13, 14, 15, 16) ein Oberflächenwellenelement (7) umfaßt.

8. Reifen nach einem der Ansprüche 6 und 7, bei dem der Sensor (6) als Energiequelle (6) für den Transponder (7, 8, 12, 13, 14, 15, 16) ausgebildet ist.

9. Verfahren zur Bestimmung einer Verschleißgröße eines sich drehend auf einem Untergrund (10) abrollenden Reifens umfassend eine radial innenliegende Karkasse (1), eine radial außen auf dieser angebrachte Basisschicht (2), ein viele radial außen auf der Basisschicht (2) angebrachte Profilelemente (3, 4, 5) umfassendes Profil sowie einen in der Basisschicht (2) angeordneten, einem aus den Profilelementen (3, 4, 5) ausgewählten Profilelement (5) zugeordneten Sensor (6), wobei das ausgewählte Profilelement (5) auf der Basisschicht von den anderen Profilelementen (3, 4) abgesetzt ist,
**dadurch gekennzeichnet,**
**daß** der Sensor (6) ein Sensor zur Bestimmung einer auf das ausgewählte Profilelement (5) einwirkenden maximalen Kraft ist, daß während des Abrollens mit dem Sensor (6) die auf das ausgewählte Profilelement (5) einwirkende maximale Kraft gemessen wird, daß aus der maximalen Kraft die Verschleißgröße bestimmt wird und daß andere Profilelemente (3) über das ausgewählte Profilelement (5) hinausragen, solange der Verschleiß des Reifens unterhalb einer vorgegebenen Grenze bleibt.

10. Verfahren nach Anspruch 9, bei dem
a) zunächst die Verschleißgröße gleich Null bestimmt;
b) ein zeitlicher Verlauf der maximalen Kraft registriert; und
c) bei Auftreten einer ersten wesentlichen Veränderung der maximalen Kraft die Verschleißgröße gleich Eins bestimmt wird.

11. Verfahren nach Anspruch 10, bei dem
a) nach dem Auftreten der ersten wesentlichen Veränderung der zeitliche Verlauf weiter registriert; und
b) bei Auftreten einer zweiten wesentlichen Veränderung, welche der ersten wesentlichen Veränderung entgegengerichtet ist, innerhalb eines vorgegebenen Zeitraums nach der ersten Veränderung die Verschleißgröße wieder gleich Null gesetzt wird.

12. Verfahren nach einem der Ansprüche 9 bis 11, bei dem der Sensor (6) mit einem in der Basisschicht angeordneten Transponder (7, 8, 12, 13, 14, 15, 16) verbunden ist und mittels des Transponders (7, 8, 12, 13, 14, 15, 16) ein eine der maximalen Kraft entsprechende Information enthaltendes Signal erzeugt und von dem Reifen abgestrahlt wird.

13. Verfahren nach Anspruch 12, Bei dem das Signal zusätzlich eine zu dem Reifen gehörige Identifizierungsinformation enthält.

14. Verfahren nach einem der Ansprüche 11 und 12, bei dem das Signal von einem von dem Reifen mechanisch getrennten Auswertegerät (11) empfangen wird, welches aus der Information die Verschleißgröße bestimmt.

## Claims

1. Tire comprising a radially inner carcass (1), a base layer (2) which is attached radially thereto on the outside, a profile which comprises a large number of profile elements (3, 4, 5) provided radially on the outside of the base layer (2), and a sensor (6) which is arranged in the base layer (2) and assigned to a profile element (5) selected from the profile elements (3, 4, 5), for determining a maximum force acting on the selected profile element (5), the selected profile element (5) on the base layer being offset from the other profile elements (3, 4), **characterized in that** other profile elements (3) project beyond the selected profile element (5) as long as the wear of the tire remains below a predefined limit.

2. Tire according to Claim 1, in which the sensor (6) is a pressure sensor (6).

3. Tire according to Claim 2, in which the sensor (6) is a piezoelectric element (6).

4. Tire according to one of the preceding claims, in which the sensor (6) is connected to a transponder (7, 8, 12, 13, 14, 15, 16) which is arranged in the base layer (2) and comprises an antenna (8), the transponder (7, 8, 12, 13, 14, 15, 16) and the sensor (6) being configured to generate a signal which can be emitted via the antenna (8) and which contains information relating to the maximum force.

5. Tire according to Claim 4, in which the transponder (7, 8, 12, 13, 14, 15, 16) is configured in such a way that the signal additionally contains an identification information item.

6. Tire according to one of Claims 4 and 5, in which the sensor (6) with the transponder (7, 8, 12, 13, 14, 15, 16) constitutes a passive electronic circuit.

7. Tire according to Claim 8, in which the transponder (7, 8, 12, 13, 14, 15, 16) comprises a surface wave element (7).

8. Tire according to one of Claims 6 and 7, in which the sensor (6) is embodied as a power source (6) for the transponder (7, 8, 12, 13, 14, 15, 16).

9. Method for determining a wear variable of a tire which rolls in a rotating fashion on an underlying surface (10) and comprises a radially inner carcass (1), a base layer (2) which is attached radially thereto on the outside, a profile which comprises a large number of profile elements (3, 4, 5) provided radially on the outside of the base layer (2), and a sensor (6) which is arranged in the base layer (2) and assigned to a profile element (5) which is selected from the profile elements (3, 4, 5), the selected profile element (5) on the base layer being offset from the other profile elements (3, 4), **characterized in that** the sensor (6) is a sensor for determining a maximum force acting on the selected profile element (5), **in that** the maximum force acting on the selected profile element (5) is measured during the rolling using the sensor (6), **in that** the wear variable is determined from the maximum force, and **in that** other profile elements (3) project beyond the selected profile element (5) as long as the wear of the tire remains below a predefined limit.

10. Method according to Claim 9, in which
a) the wear variable is first set to be equal to zero;
b) a chronological profile of the maximum force is recorded; and
c) the wear variable is set to be equal to one when a first significant change in the maximum force occurs.

11. Method according to Claim 10, in which
a) after the occurrence of the first significant change, the chronological profile is recorded again; and
b) when a second significant change which is opposed to the first significant change occurs within a predefined time period after the first change the wear variable is set to be equal to zero again.

12. Method according to one of Claims 9 to 11, in which the sensor (6) is connected to a transponder (7, 8, 12, 13, 14, 15, 16) which is arranged in the base layer, and a signal which contains an information item corresponding to the maximum force is generated by means of the transponder (7, 8, 12, 13, 14, 15, 16) and emitted by the tire.

13. Method according to Claim 12, in which the signal additionally contains an identification information item which is associated with the tire.

14. Method according to one of Claims 11 and 12, in which the signal is received by an evaluation unit (11) which is mechanically separated from the tire and which determines the wear variable from the information.

## Revendications

1. Pneumatique comprenant une carcasse radialement intérieure (1), une couche de base (2) ajoutée radialement à l'extérieur sur celle-ci, un profil comprenant de nombreux éléments de profil (3, 4, 5) ajoutés sur la couche de base (2), radialement à l'extérieur, ainsi qu'un détecteur (6) disposé dans la couche de base (2), associé à un élément de profil (5) sélectionné parmi les éléments de profil (3, 4, 5) et servant à la détermination d'une force maximale agissant sur l'élément de profil sélectionné (5), l'élément de profil sélectionné (5) étant en retrait des autres éléments de profil (3, 4) sur la couche de base.
**caractérisé**
**en ce que** d'autres éléments de profil (3) font saillie au-delà de l'élément de profil sélectionné (5) aussi longtemps que l'usure du pneumatique reste inférieure à une limite prédéterminée.

2. Pneumatique selon la revendication 1, dans lequel le détecteur (6) est un détecteur de pression (6).

3. Pneumatique selon la revendication 2, dans lequel le détecteur (6) est un élément piézo-électrique (6).

4. Pneumatique selon une des revendications précédentes, dans lequel le détecteur (6) est relié à un transpondeur (7, 8, 12, 13, 14, 15, 16) disposé dans la couche de base (2) et comprenant une antenne (8), le transpondeur (7, 8, 12, 13, 14, 15, 16) et le détecteur (8) étant agencés pour produire un signal qui peut être émis par l'intermédiaire de l'antenne (2 8) et qui contient une information sur la force maximale.

5. Pneumatique selon la revendication 4, dans lequel le transpondeur (7, 8, 12, 13, 14, 15, 16) est agencé de manière que le signal contienne en supplément une information d'identification.

6. Pneumatique selon une des revendications 4 et 5, dans lequel, avec le transpondeur (7, 8, 12, 13, 14, 15, 16), le détecteur (6) représente un circuit électronique passif.

7. Pneumatique selon la revendication 6, dans lequel le transpondeur (7, 8, 12, 13, 14, 15, 16) comprend un élément à onde de surface.

8. Pneumatique selon l'une des revendications 6 et 7, dans lequel le détecteur (6) est construit comme source d'énergie (6) pour le transpondeur (7, 8, 12, 13, 14, 15, 16)

9. Procédé de détermination d'un degré d'usure d'un pneumatique qui, en rotation, roule sur un support (10), comprenant une carcasse radialement intérieure (1), une couche de base (2) ajoutée radialement à l'extérieur sur celle-ci, un profil comprenant de nombreux éléments de profil (3, 4, 5) ajoutés radialement à l'extérieur sur la couche de base (2), ainsi qu'un détecteur (6) disposé dans la couche de base (2) et associé à un élément de profil (5) sélectionné parmi les éléments de profil (3, 4, 5), l'élément de profil sélectionné (5) étant en retrait des autres éléments de profil (3, 4) sur la couche de base.
**caractérisé**
**en ce que** le détecteur (6) est un détecteur servant à la détermination d'une force maximale agissant sur l'élément de profil (5) sélectionné, en ce que, pendant le roulement, la force maximale agissant sur l'élément de profil sélectionné (5) est mesurée avec le détecteur, en ce que le degré d'usure est déterminé à partir de la force maximale et en ce que d'autres éléments de profil (3) font saillie au-delà de l'élément de profil sélectionné (5) aussi longtemps que l'usure du pneumatique reste inférieure à une limite prédéterminée.

10. Procédé selon la revendication 9, dans lequel
a) initialement, le degré d'usure est défini égal à zéro ;
b) une courbe de variation dans le temps de la force maximale est enregistrée ; et
c) lors de l'apparition d'une première modification notable de la force maximale, le degré d'usure est défini égal à un.

11. Procédé selon la revendication 10, dans lequel
a) après l'apparition de la première modification notable, la courbe de variation dans le temps est de nouveau enregistrée ; et
b) lors de l'apparition d'une deuxième modification notable, de sens opposé à celui de la première modification notable, dans un laps de temps prédéterminé après la première modification, le degré d'usure est de nouveau fixé égal à zéro.

12. Procédé selon une des revendications 9 à 11, dans lequel le détecteur (6) est relié à un transpondeur (7, 8, 12, 13, 14, 15, 16) disposé dans la couche de base et, au moyen du transpondeur (7, 8, 12, 13, 14, 15, 16), un signal contenant une information correspondant à la force maximale est produit et émis par le pneumatique.

13. Procédé selon la revendication 12, dans lequel le signal contient en supplément une information d'identification appartenant au pneumatique.

14. Procédé selon une des revendications 11 et 12, dans lequel le signal est reçu par un appareil d'évaluation (11) séparé mécaniquement du pneumatique et qui détermine le degré d'usure à partir de l'information.
